# EUROPEAN PATENT APPLICATION

(11) **EP 4 744 958 A1**
(43) Date of publication of application: **20.05.2026**
(21) Application number: 24213787.5
(22) Date of filing: 19.11.2024
(51) Int. Cl.: B60N 2/28, B60R 22/10

(54) **A CHILD VEHICLE SEAT**

(71) Applicant: Maxi Miliaan B.V., 5704 RD Helmond (NL)
(72) Inventor: Salters, Erik Laurens, Geldrop (NL); Leijenaar, Sybren Yme, Sint Nicolaasga (NL); Van Barneveld, Marcus Alexander, Lochem (NL); De Jong, Thomas Maarten, Deventer (NL)
(74) Representative: Veldman-Dijkers, Cornelia G. C.

(57) **Abstract**

A child vehicle seat (1) comprising a base (2) and a seat (3) being rotatable about a rotation axis (5) with respect to the base from at least a first rotation position to a second rotation position and vice versa. The seat is provided with means for holding a child in the seat, which means being adjustable with respect to a child sitting in the seat. The adjustable means are adjustable from a first operation position to a second operation position by rotating the seat with respect to the base between the first rotation position and the second rotation position and/or vice versa.

## Description

### FIELD OF THE INVENTION

The invention relates to a child vehicle seat comprising a base and a child seat being rotatable about a rotation axis with respect to the base from at least a first rotation position to a second rotation position and vice versa, which child seat is provided with means for holding a child in the child seat, which means being adjustable with respect to a child sitting in the child seat.

### BACKGROUND OF THE INVENTION

By such a child vehicle seat as known from US20240116412A1, a seat is being rotatable about a rotation axis with respect to a base between a forward-facing orientation, a sideways orientation and a rearward facing orientation. In the sideways orientation the seat faces a door of the vehicle for child ingress and egress. The forward-facing orientation and rearward facing orientation are transportation orientations for child transportation in the vehicle. The sideways orientation is often called a side facing position to load and unload the child in and from the seat. The seat is provided with a child restraint harness configured to restrain a child to the seat.

When using the child vehicle seat, a user needs to attach the child vehicle seat to the vehicle, move the seat to the sideways orientation, place the child in the seat, fix the child with the harness to the seat, tension the harness, rotate the seat to the desired transport orientation etc. When the child needs to be removed from the seat, the user needs to rotate the seat to the sideways orientation, release and remove the harness, and take the child from the seat. If the seat comprises other adjustable means for holding the child in the site like for example an adjustable headrest, adjustable side supports, the user must adjust these features as well to the size and age of the child. These are several operations for a user to ensure that a child is easily and safely positioned in the seat, whereby a user can easily forget one of more of these operations. Furthermore, these operations are time consuming.

### SUMMARY OF THE INVENTION

At least one of the objects of the invention is to provide a child vehicle seat which will limit the number of operations for a user to easily and safely position a child in the child seat and remove the child from the child seat, whereby the comfort and/or safety of the child is improved.

This object is accomplished with the child vehicle seat according to the invention in that the adjustable means are adjustable from a first operation position to a second operation position by rotating the child seat with respect to the base between the first rotation position and the second rotation position and/or vice versa.

By the child vehicle seat according to the invention rotating of the child seat with respect to the base from one rotation position to another rotation position automatically causes an adjustment of the adjustable means so that a user needs no longer take care of this adjustment himself. Furthermore, the adjustment cannot be forgotten since it will automatically take place by rotating the seat.

An embodiment of the child vehicle seat according to the invention is characterized in that the adjustable means comprise a harness of the child seat, whereby tension of the harness is adjustable to secure the child with a desired tension in the child seat, which tension is increased from a relative low tension at the first operation position to the desired higher tension at the second operation position, whereby the first rotation position is a side facing position whilst the second rotation position is a transport position.

It is commonly known to secure a child to the seat by means of the harness. However, the child is only safely secured to the seat if the harness is tightened around the child with sufficient tension. If it is too loose, the child can easily move with respect to the harness in case of an accident. If it is too tight, the child will feel uncomfortable. Since, the necessary size of the harness depends on the size of the child but also on the amount and thickness of the clothing the child is wearing at a certain moment, the size of the harness needs to be adjusted regularly to ensure that harness is tensioned with the desired tension after each ingress and egress. By the child vehicle seat according to the invention, a user simply needs to place the child in the seat and close the harness, after which by rotating the seat from the side facing position to the transport position the harness will automatically be tensioned to the desired tension. A user needs to adjust no longer the tension himself, for example if the child was wearing a sweater in the morning but is not wearing the sweater in the afternoon, or the other way around. When the child wears a sweater the size of the harness will need to be larger than when the same child does not wear the sweater.

Another embodiment of the child vehicle seat according to the invention is characterized in that the adjustable means comprise a harness of the child seat, whereby the length of the harness is adjustable to a larger length enabling the child to easy leave and/or enter the child seat, with length is increased from a short length at the second operation position when the child is secured in the child seat by means of the harness to the larger length at a first operation position, whereby the second rotation position is a transport position whilst the first rotation position is a side facing position.

When a user needs to place a child in the seat or remove a child from the seat, it is preferred that the harness is relatively loose and large so that amongst others the arms of the child can easily be placed in or be removed from the harness.

By the child vehicle seat according to the invention, by rotating the seat from the transport position to the side facing position the harness will automatically be adjusted to a larger length so that at the side facing position the harness can be loosely positioned or will be loosely located around the child.

Preferably, by rotating the seat from the side facing position back to the transport position the harness will automatically be tensioned to the desired tension as described above.

Another embodiment of the child vehicle seat according to the invention is characterized in that the adjustable means comprise a buckle of a harness of the seat, which buckle is adjustable from the second operation position being a closed position of the buckle wherein the child is secured in the child seat by the harness to the first operation position being an opened position of the buckle, whereby the second rotation position is a transport position whilst the first rotation position is a side facing position.

By prior art seats the user needs to open the buckle when the seat has been rotated from the transport position to the side facing position.

By the child vehicle seat according to the invention, by rotating the seat from the transport position to the side facing position the buckle will automatically be opened, so that the user does not need to do it himself.

Preferably, by rotating the seat from the transport position to the side facing position and after the buckle has been opened, the harness will automatically be adjusted to a larger length so that at the side facing position the harness will be loosely located around the child and a user can easily take the child out of the seat.

Another embodiment of the child vehicle seat according to the invention is characterized in that the child vehicle seat comprises at least two adjustable means as mentioned above.

By having several adjustable means like tensioning the harness, enlarging the size of the harness and opening the buckle the number of operations a user must perform to insert or remove a child from the seat is reduced and the safety of the child in the seat is enlarged.

Another embodiment of the child vehicle seat according to the invention is characterized in that the second rotation position is a transport position being a forward-facing transport position or a rearward facing transport position.

The transport position can be a forward-facing transport position and/or a rearward facing transport position whereby by rotating to or from both transport positions to the side facing positions the adjustable means can be adjusted.

It is also possible that by rotating the seat from the forward-facing transport position to the rearward facing transport position or vice versa, adjustable means are adjusted, for example that by rotating the seat from the forward-facing transport position to the rearward facing transport position a height of the headrest is reduced or vice versa. In such a case the forward-facing transport position is a first rotating position whilst the rearward facing transport position is a second rotating position or vice versa.

Another embodiment of the child vehicle seat according to the invention is characterized in that the base is provided with at least one circular shaped profile having an axis which coincides with the rotation axis, whilst a seat carrying element is provided with profile follower located against the at least one circular shaped profile, which profile follower follows the at least one circular shaped profile when the child seat is being rotated with respect to the base from the first rotation position to the second rotation position and/or vice versa to adjust the adjustable means from the first operation position to the second operation position and/or vice versa.

By rotating the seat, the profile follower will follow the circular shaped profile, thereby being moved in a direction parallel to the rotating axis. Movement of the profile follower will cause the adjustable means to be adjusted from the first operation position to the second operation position and/or vice versa. The profile will determine at each angular location, the exact position of the profile follower and thus the operation position of the adjustable means. Such a profile can easily be designed, made and adapted to the desired operation of different adjustable means.

Another embodiment of the child vehicle seat according to the invention is characterized in that the circular shaped profile comprises at least one slope along which the profile follower is movable to gradually move the adjustable means from the first operation position to the second operation position and/or vice versa.

Such a slope can be used for example for gradually tensioning the harness or gradually performing other operations

Another embodiment of the child vehicle seat according to the invention is characterized in that the circular shaped profile comprises at least one ridge over which the profile follower is movable to instantaneously move the adjustable means from the first operation position to the second operation position and/or vice versa.

Such a ridge can be used for example for instantaneously opening a buckle harness or instantaneously performing other operations.

Another embodiment of the child vehicle seat according to the invention is characterized in that the child vehicle seat is movable to two opposite located side facing positions, whereby the circular shaped profile comprises at least four ridges located at 5-10 degrees on each side of each side facing position.

In this way, when rotating the seat from the forward-facing position or the rearward facing position in a clockwise or counterclockwise direction to one of the two side facing positions, the profile follower will always be moved over one of the ridges so that the adjustable means will always be adjusted before reaching the side facing position.

Another embodiment of the child vehicle seat according to the invention is characterized in that the buckle is being opened when the profile follower is being moved over the ridge.

A buckle needs to be opened instantaneously. This can easily be realised by a ridge over which the profile follower is being moved. When the circular shaped profile comprises at least four ridges located at 5-10 degrees on each side of each side facing position, the buckle will always be opened just before reaching the side facing position.

When the buckle has been locked in the side facing position the buckle will remain locked when moving to the rearward facing position or the forward-facing position.

Another embodiment of the child vehicle seat according to the invention is characterized in that the child seat is pivotable about a horizontal axis from a first pivoted position to a second pivoted position, wherein the profile follower is provided at a distance of the at least one circular shaped profile with an auxiliary profile extending perpendicular to the profile on the base, whereby the adjustable means is provided with an auxiliary profile follower, which auxiliary profile follower follows the auxiliary profile when the seat is being pivoted.

Pivoting a seat about a horizontal axis is also called reclining of the seat, whereby the seat can be reclined to a desired position. By having the auxiliary profile extending perpendicular to the profile, the adjustable means are adjustable whilst the seat can also be reclined.

Another embodiment of the child vehicle seat according to the invention is characterized in that the radius of pivoting of the child seat is the same as the radius of the auxiliary profile.

In this manner the adjustable means are adjustable independent of the reclination of the seat.

Another embodiment of the child vehicle seat according to the invention is characterized in that the child seat is provided with a first and second closable lock and a tensioning device located between the two locks, whereas the harness is provided with a tensioning belt, which tensioning belt extends from the harness through the first lock, along the tensioning device and trough the second lock, whereby when both locks are closed, the tensioning device is movable against spring force of the first respectively second lock thereby pulling the tensioning belt through the first and/or second lock to tension the harness to the desired tension, whilst movement of the tensioning belt in the first respectively second lock in a direction away from the other lock is locked.

When the locks are closed, movement of the tensioning belt in a first direction away from the other lock is locked so that the size of the harness can no longer be enlarged. However, movement of the tensioning belt through each lock in a second direction opposite to the first direction against the spring force of the lock is possible. When the tensioning device is being moved away from the locks a force will applied on the tensioning belt located between the locks. On the side of the second lock a predetermined force is applied on the tensioning belt. If the force on the tensioning device, is larger than the predetermined force, a part of the tensioning belt located will be pulled through the second lock towards the tensioning device. If the force on the tensioning device, is smaller than the predetermined force, but larger than the spring force of the first lock, a part of the tensioning belt on the side of the harness will be pulled through the first lock, thereby pulling the harness tighter on the child. If the force needed to pull the tensioning belt through the first lock is larger than to pull the tensioning belt through the second lock and larger than the predetermined force, a part of the tensioning belt will be pulled through the second lock towards the tensioning device. So, the maximum force applied on the part of the tensioning belt on the side of the harness will be the same as the predetermined force. In this manner, the tension of the harness on the child will always be the same. The tension on the child will never be higher than the predetermined force.

Another embodiment of the child vehicle seat according to the invention is characterized in that after opening the second lock and the first lock is still closed, the tensioning device is movable towards the locks to allow part of the tensioning belt located between the locks and along the tensioning device to be moved through the second lock in the direction of the harness so that the length of the harness including the tensioning belt on a side of the second lock is adjustable to the larger length enabling the child to easy leave and/or enter the seat.

When the first lock is still closed, movement of the tensioning belt through the first lock in the second direction is still prevented. When opening the second lock and either moving the tensioning device towards the two locks or pulling on the harness, the part of the tensioning belt located between the two locks and located around the tensioning device can be moved towards the harness, so that the harness will become loosely engaged around the child. In this manner the arms of the child can easily be moved out of the harness after which a user can easily remove the child from the seat. As long as the first lock remains closed, the harness will maintain its loose size so that when placing the child again in the seat, the child can easily put his arms through the harness. After a buckle of the harness is closed, the first lock will be opened to pull with the predetermined force on the tensioning belt. After closing the first lock as well as the second lock, the harness can be tensioned to the desired tension by means of the tensioning device.

Another embodiment of the child vehicle seat according to the invention is characterized in that the child seat is provided with an automatic tensioning belt spooling mechanism on side of the first lock opposite to the tensioning device and opposite to the harness.

By means of the automatic tensioning belt spooling mechanism a predetermined force can easily be applied on the tensioning belt.

Another embodiment of the child vehicle seat according to the invention is characterized in that the child seat is removably connected to the base.

In this manner different seats can be used on the same base. Furthermore, the cild seat as removed from the base can be used outside the vehicle on a stroller, for example.

The removed child seat comprises the adjustable means, and in the relevant embodiments the profile follower and/or auxiliary profile follower.

### BRIEF DESCRIPTION OF THE DRAWINGS

The child vehicle seat according to the invention will further be explained with reference to the drawings, wherein,
figure 1A is a perspective view of a child vehicle seat according to the embodiment of the invention,
figure 1B is a rear view of the child seat of the child vehicle seat as shown in figure 1A,
figures 2A-2CB are perspective views and a top view of a central part of the base of the child vehicle seat as shown in figure 1,
figures 3A-3D are front views of a first unfolded ring of the central part as shown in figures 2A and 2B as well as parts mounted on the child seat,
figures 4A-4B are side views of the first unfolded ring of the central part as shown in figures 3A and 3B as well as the parts mounted on the child seat,
figures 5A-5B are front views of a second unfolded ring of the central part as shown in figures 2A and 2B as well as parts mounted on the child seat,
figures 6A-6B are side views of the second unfolded ring of the central part as shown in figures 5A and 5B as well as the parts mounted on the child seat,
figure 7 is another side view of the second ring of the central part as shown in figures 2A and 2B as well as parts mounted on the child seat,
figures 8A and 8B are side views of a buckle and a lock of the child vehicle seat as shown in figure 1,
figures 9A-9D are front views of a third unfolded ring of the central part as shown in figures 2A and 2B as well as parts mounted on the child seat.

In the drawings, like reference numerals refer to like elements.

### DESCRIPTION OF PREFERRED EMBODIMENTS

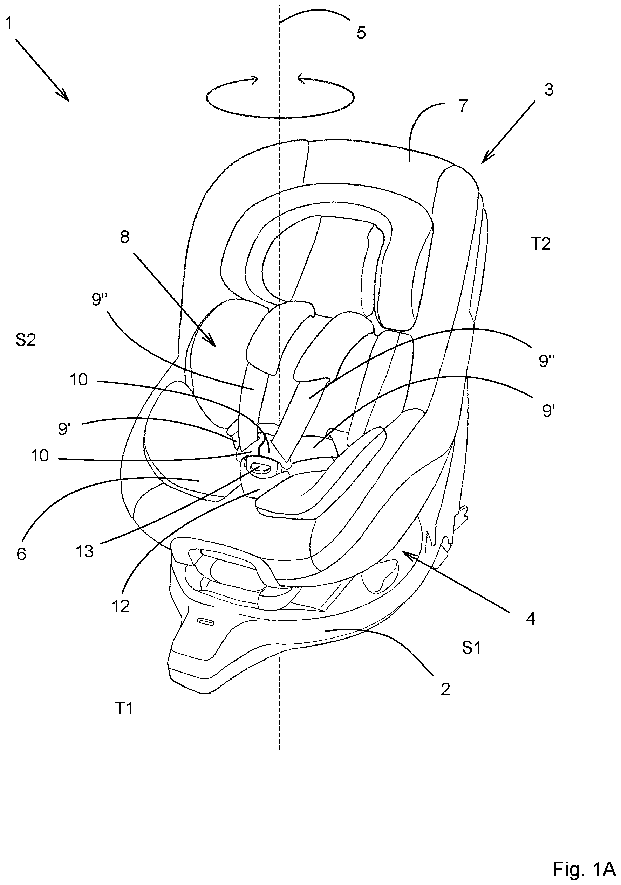

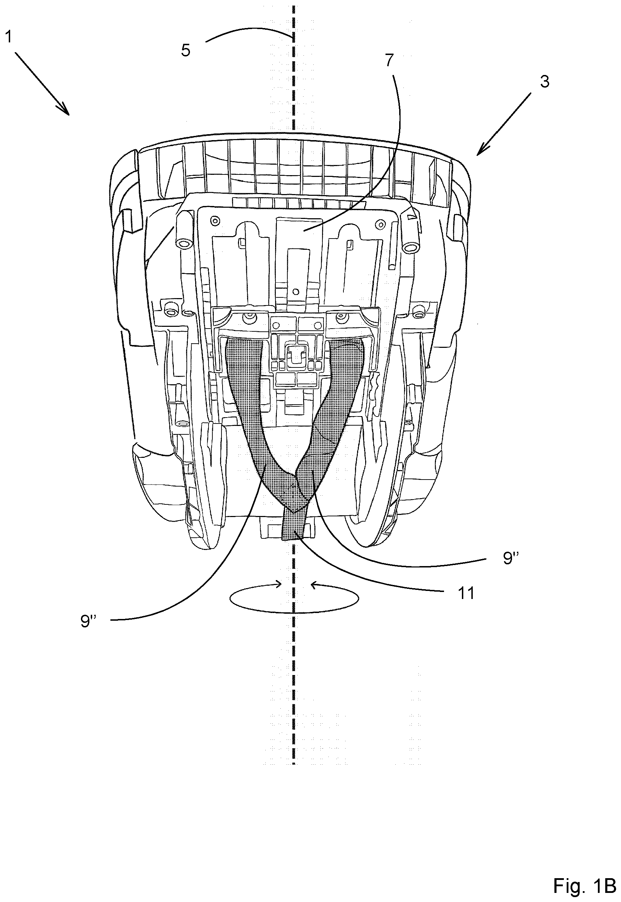

Figures 1A-1B show a child vehicle seat 1 according to the invention. The child vehicle seat 1 comprises a base 2 and a child seat 3. The base 2 is provided with a rotating platform 4 onto which the child seat 3 is detachably mounted. By means of the rotating platform 4, the child seat 3 is rotatably about a rotation axis 5 from a first transport position T1, to two side facing positions S1, S2 facing the door of the vehicle to a second transport position T2 and vice versa. The first transport position T1 is for example the forward-facing position and the second transport position T2 is for example the rearward facing position or vice versa. The child seat 3 comprises a seat portion 6 and a backrest portion 7. The child seat 3 is provided with a harness 8 comprising two lap belts 9' being connected with first ends to the seat portion 6 and via openings in buckle tongues 10 to a shoulder belt 9". The shoulder belt 9" extend through passages in the backrest portion 7. Such a harness 8 is called a 5 point harness. On the rear side of the backrest portion 7 the shoulder belts 9" are connected to a single tensioning belt 11 (see figure 1B). The harness 8 further comprises a crotch belt 12 connected to the seat portion 6 and provided with a buckle 13. The buckle 13 can be detachably connected to the two buckle tongues 10 to close the harness 8. The size of the harness 8 can be adjusted to the size of the child using the child vehicle seat 1. Preferably the child seat 3 is pivotable about a horizontal axis from a first pivoted position to a second pivoted position to be able to recline the child seat 3.

The child vehicle seat 1 described so far is well known in the art and will not further be explained.

As will be explained here below the child vehicle seat 1 according to the invention differs from the known child vehicle seats in that adjustable means for holding a child in the seat are adjustable from a first operation position to a second operation position by rotating the seat with respect to the base between the first rotation position and the second rotation position and/or vice versa. In this manner it is ensured that the adjustable means are adjusted each time that the child seat is being rotated between the selected operation positions so that a user does no longer take care of the adjustments himself.

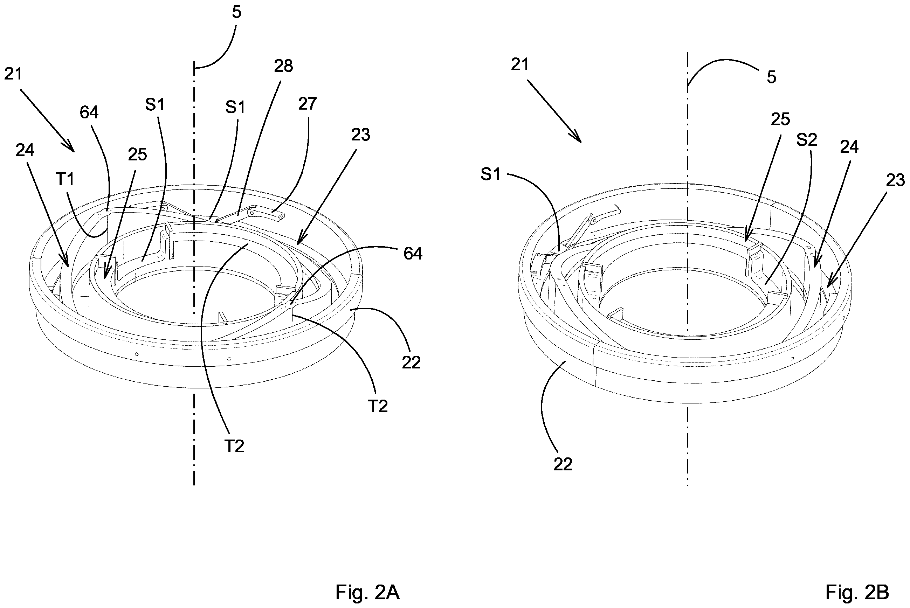

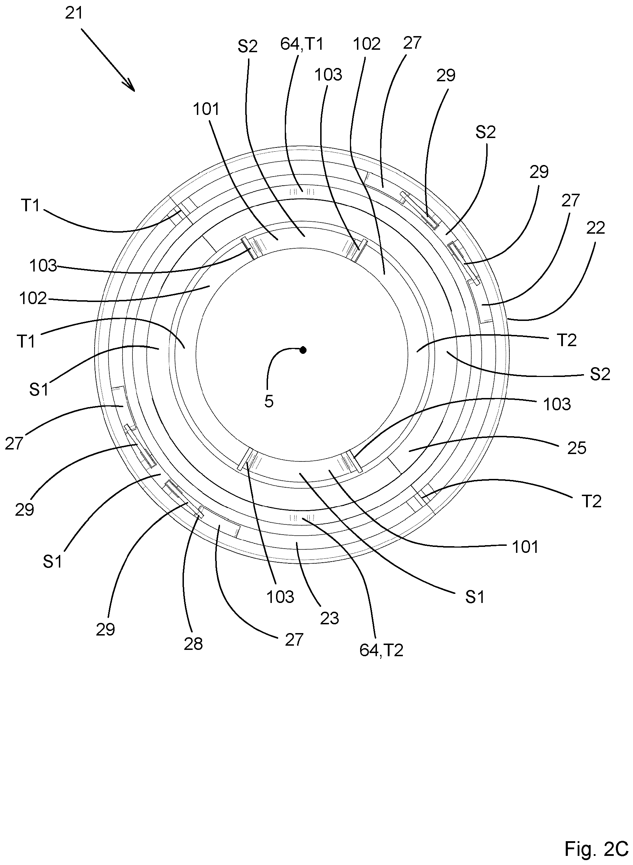

The figures 2-8 show details of a first embodiment of a child vehicle seat 1 according to the invention.

Figures 2A-2B and 2C show perspective views and a top view of a central part 21 of the rotating platform 4 of the base 2 of the child vehicle seat 1. The central part 21 comprises an outer ring 22 and three inner rings. Each ring is provided with one of the three circular shaped profiles 23, 24, 25. The circular shaped profiles 23, 24, 25 have axes which coincide with the rotation axis 5 of the child seat 3. Each circular shaped profiles 23, 24, 25 cooperates with parts mounted on the child seat 3 to adjust one or more adjustable means in the child seat 3.

The child seat 3 can be placed in four operation positions being a forward facing position T1, a rearward facing position T2 and the two side facing positions S1, S2. It is also possible that T1 is the rearward facing transport position and T2 is the forward-facing transport position. The forward-facing position T1 of the child seat is for example located at o degrees, the two side facing positions at 90 degrees and 270 degrees whilst the rearward facing position is located at 180 degrees rotation. These degrees may be different if suitable. Normally, there will be 180 degrees between the two transport positions T1, T2. However, if desired the angle under which the child seat 3 is directed to the door of the vehicle might be at less or more than 90 degrees from the forward facing position.

The distance between the circular shaped profile 23, 24, 25 is relatively small and the means to operate the adjustment means activated by each of the circular shaped profile 23, 24, 25 are often much wider. So, most of the time it is not possible to locate the means to operate the adjustment means all at the positions T1, S1, T2, S2 of the child seat 3 and next to each other. Therefore, the circular shaped profiles 23, 24, 25 are positioned in such orientation in the central part 21 that at the right moment the right means to operate the adjustment means are activated by the circular shaped profile 23, 24, 25.

The positions on the circular shaped profiles 23, 24 correspond to the two transport positions T1, T2 and the two side facing positions S1, S2 of the child seat 3 but are normally not all located at the two transport positions T1, T2 and the two side facing positions S1, S2.

Details of the circular shaped profiles 23, 24, 25 will be explained here below, whereby the circular shaped profiles 23, 24, 25 are shown in a plane to more clearly show the relevant features of each circular shaped profile 23, 24, 25. For each circular shaped profile 23, 24, 25 the positions of the profile followers (roller 43, roller 73, pen 115 as will be explained here below) corresponding to the positions S1, T1, S2, T2 of the child seat 3 are indicated. These are the positions corresponding to the actual position of the child seat 3 and not of the actual positions of the circular shaped profile 23, 24, 25.

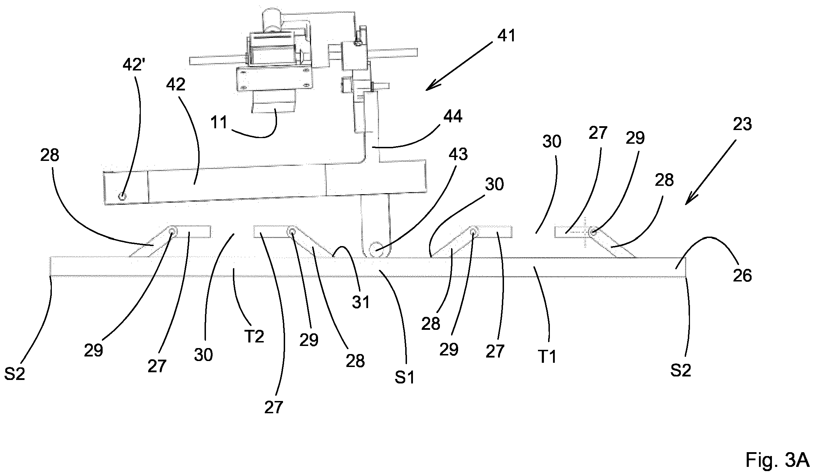

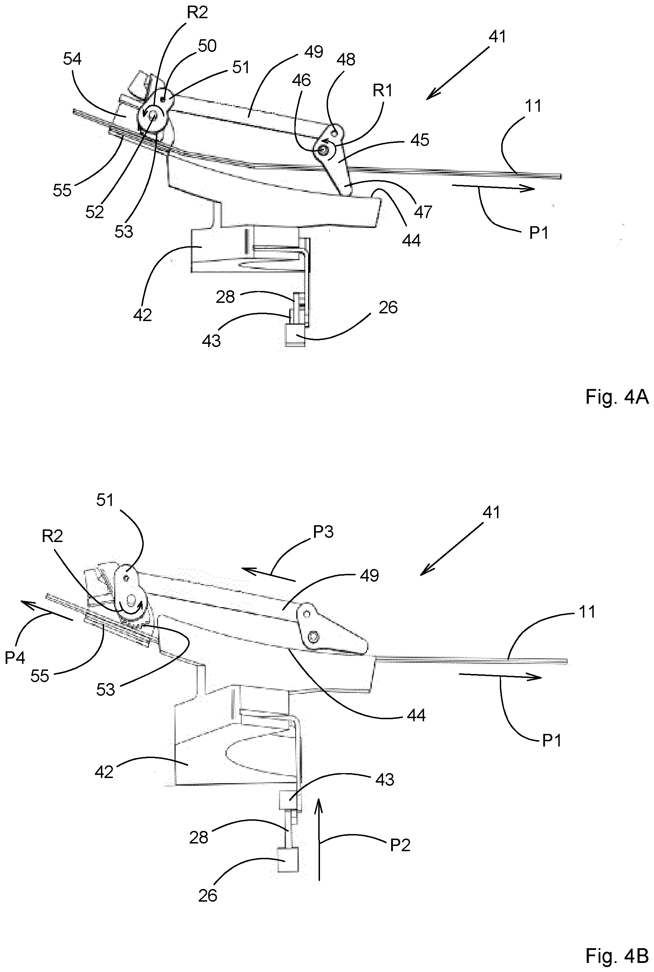

Figures 3A-3D, 4A-4B show of a first unfolded ring of the central part 21 as shown in figures 2A and 2B comprising the first circular shaped profile 23 as well as parts mounted on the child seat 3.

The first circular shaped profile 23 comprises a flat strip 26 extending over the full circumference of the first circular shaped profile 23. The first circular shaped profile 23 also comprises four short flat supporting surfaces 27 located at a distance of the flat strip 26 as well as four inclined supporting surfaces 28 being pivotably about pivot axis 29 connected to the short flat supporting surfaces 27. At the location of each transport position T1, T2, there is a free space 30 between two adjacent short flat supporting surfaces 27. The inclined supporting surfaces 28 are pivotably connected at opposite sides of these two adjacent short flat supporting surfaces 27. Ends 31 of the inclined supporting surfaces 28 rest on the flat strip 26. The side facing positions S1, S2 are located between two inclined supporting surfaces 28 directed towards each other.

The child seat 3 is provided with a first belt tensioning device 41 for tensioning the tensioning belt 11 of the harness 8 and thereby shortening the tensioning belt 11 and tensioning the shoulder belts 9" and lap belts 9'. The belt tensioning device 41 comprises a frame 42 provided with a roller 43 resting on the first circular shaped profile 23 of the base 2. The frame 42 is pivotably about pivot axis 42' connected to a non-reclining part of the child seat 3. The frame 42 comprises a first auxiliary profile 44 having a curved surface.

A reclining part of the child seat 3 comprises a first cam 45 being pivotable against spring force about pivot axis 46 in and opposite direction indicated by arrow R1. A first end 47 of the first cam 45 rests under spring force against the first auxiliary profile 44. A second end 48 of the first cam 45 is pivotably connected via rod 49 to a first end 50 of a second cam 51. The second cam 51 is pivotable against spring force about pivot axis 52 in and opposite direction indicated by arrow R1. The second cam 51 is connected to a teethed profile 53 of a first lock 54.

The tensioning belt 11 extends between the teethed profile 53 and a supporting surface 55 of the first lock 54. On the right side the tensioning belt 11 is connected to the shoulder belts 9" (not shown). On the left side the tensioning belt 11 is connected to an automatic tensioning belt spooling mechanism (not shown). The automatic tensioning belt spooling mechanism pulls with a predetermined force on the tensioning belt 11. Such automatic tensioning belt spooling mechanism for vehicle belts is well known in the art and is not further explained.

In the position as shown in figure 4A, the roller 43 rests on the flat strip 26 and the teethed profile 53 of a first lock 54 engages the tensioning belt 11 of the harness 8. When pulling on the tensioning belt 11 in the direction indicated by arrow P1, so towards the shoulder belts 9", with a force being larger than the predetermined force of the automatic tensioning belt spooling mechanism and the force pressing the teethed profile 53 against the supporting surface 55 of the first lock 54 , the tensioning belt 11 can be unreeled from the automatic tensioning belt spooling mechanism to obtain more length in the harness 8 so that the harness 8 can easily be placed around the child sitting in the child seat 3.

However, pulling of the tensioning belt 11 towards the automatic tensioning belt spooling mechanism is prevented by the teethed profile 53 pressing the tensioning belt 11 the against the supporting surface 55.

When the child seat 3 is being reclined between different recline positions, the cams 45, 51, rod 49 and first lock 54 will be reclined together with de child seat 3, whereby the cam 45 will move over the curved surface of the first auxiliary profile 44, thereby maintaining contact with the first auxiliary profile 44.

In the position as shown in figure 4B, the roller 43 rests on the short flat supporting surface 27 due to which the frame 42 and the first auxiliary profile 44 have been moved upwards in the direction indicated by arrow P2. The first cam 45 has been pivoted against spring force in the direction indicated by arrow R1, the rod 49 has been moved in the direction indicated by arrow P3 and the cam 51 and teethed surface 53 have been pivoted against spring force in the direction of arrow R2. The teethed profile 53 of a first lock 54 no longer engages the tensioning belt 11 of the harness 8. When pulling on the tensioning belt 11 in the direction indicated by arrow P1, so towards the shoulder belts 9", with a force being larger than the predetermined force of the automatic tensioning belt spooling mechanism, the tensioning belt 11 can still be unreeled from the automatic tensioning belt spooling mechanism to obtain more length in the harness 8 so that the harness 8 can be placed around the child sitting in the child seat 3. However, when the force applied on the tensioning belt 11 in the direction indicated by arrow P1 is lower than the predetermined force of the automatic tensioning belt spooling mechanism, the automatic tensioning belt spooling mechanism will automatically reel the tensioning belt 11 in in the direction as indicated by arrow P4 until the force applied on the tensioning belt 11 in the direction indicated by arrow P1 and P4 are equal.

The first circular shaped profile 23 and the belt tensioning device 41 works as follows.

In figure 3A the child seat 3 is in a side facing position S1 whereby the roller 43 rests on the flat strip 26. The belt tensioning device 41 is in the locked position as shown in figure 4A. A user can place the child in the child seat 3, place the harness 8 around the child and lock the buckle tongues 10 in the buckle 13. If desired the user can pull on the shoulder belts 9" to obtain more length to make it easier to place the harness 8 around the shoulders of the child.

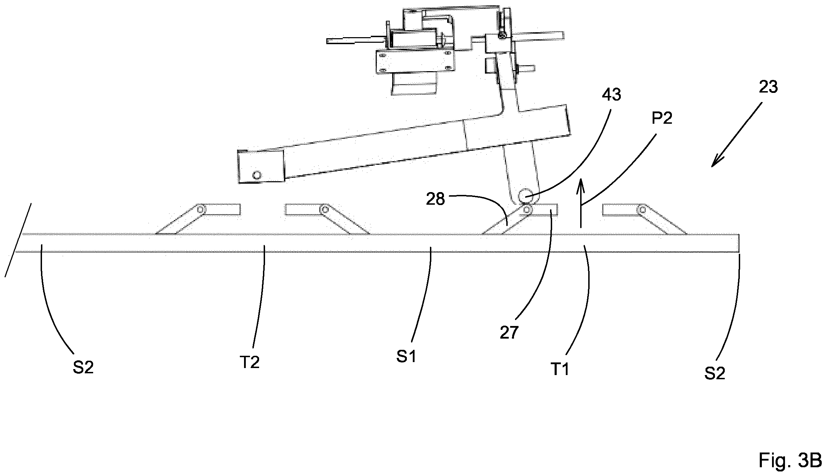

As soon as the buckle 13 of the harness 8 is locked, the child seat 3 is rotated by the user towards transport position T1. As can be seen in figure 3B, the roller 43 will slide over the nearest inclined supporting surface 28 thereby moving the frame 42 and the first auxiliary profile 44 upwards in the direction indicated by arrow P2 and slowly unlocking the first lock 54. As soon as the roller 43 reaches the supporting surface 27, the first lock 54 is completely unlocked (figure 4B) and the automatic tensioning belt spooling mechanism will automatically reel the tensioning belt 11 in in the direction as indicated by arrow P4 until the force applied on the tensioning belt 11 in the direction indicated by arrow P1 and P4 are equal.

When further rotating the child seat towards transport position T1, the roller 43 reaches the free space 30 between two adjacent short supporting surfaces 27. The roller 43, the frame 42 and the first auxiliary profile 44 will drop under gravity in the direction opposite to the direction indicated by arrow P2 and immediately lock the first lock 54.

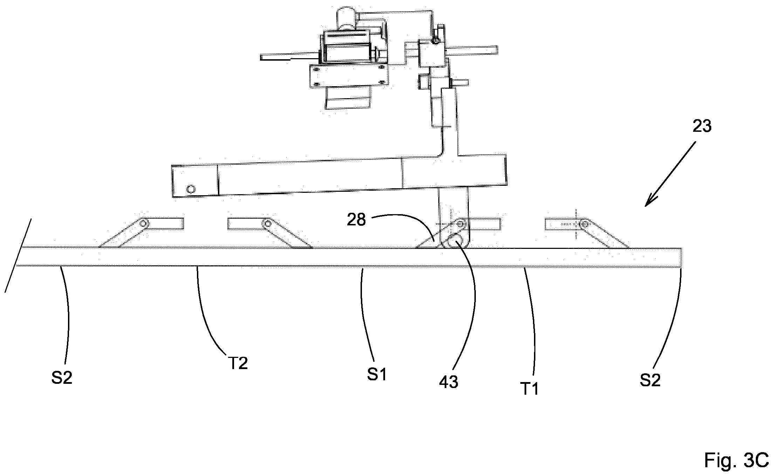

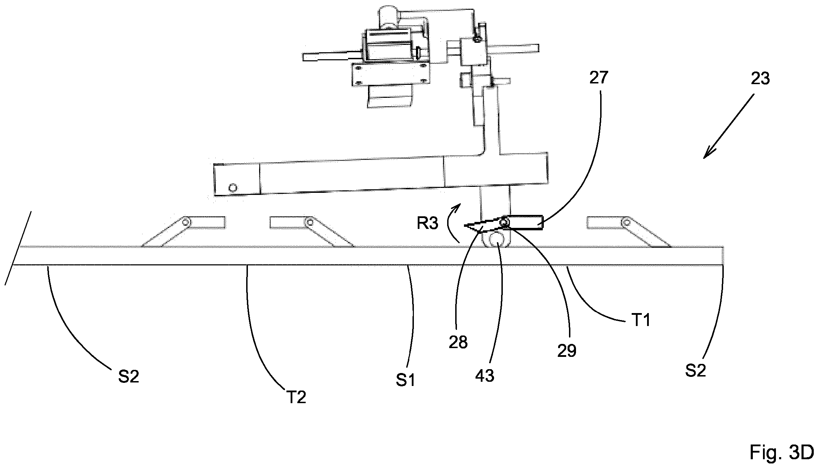

When a user wants to remove the child from the child vehicle seat 1, the user rotates the child seat 3 from the transport position T1 towards the side facing position S1. The roller 43 will roll over the flat strip 26 (figure 3C) and will push against the nearest inclined supporting surface 28, thereby pivoting the inclined supporting surface 28 about pivot axis 29 in the direction indicated by arrow R3 (figure 3D). The roller 43 will remaining rolling over the flat strip 26 to the side facing position S1. During the whole movement of the roller 43 and the belt tensioning device 41 from the transport position T1 to the side facing position S1, the first lock 54 remains locked.

The same applies when rotating the child seat 3 towards and away from transport position T2 and/or side facing position S2.

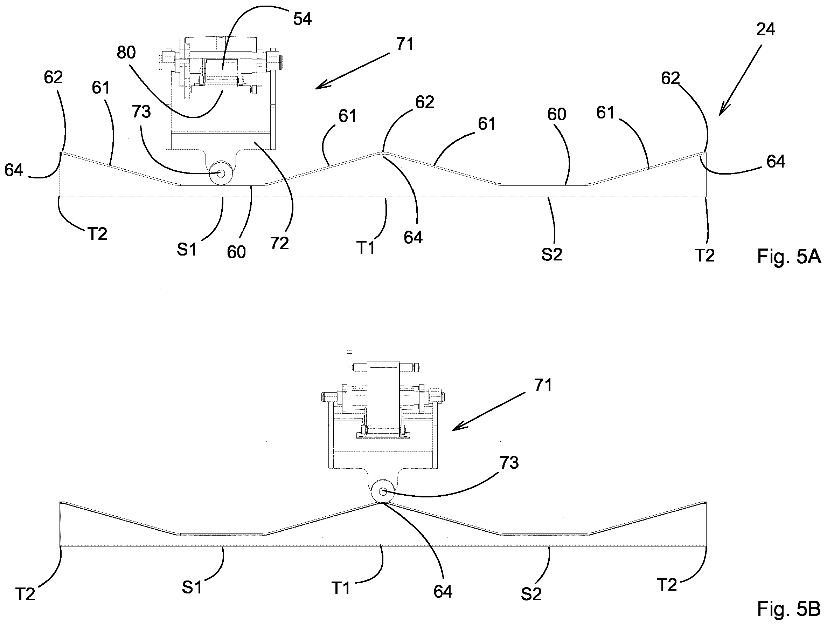

Figures 5A-5B, 6A-6B, 7 show a second unfolded ring of the central part 21 as shown in figures 2A and 2B comprising the second circular shaped profile 24 as well as parts mounted on the child seat 3.

The second circular shaped profile 24 comprises a flat supporting surface 60 near each side facing position S1, S2 and inclined supporting surfaces 61 raising upwards from the flat supporting surface 60 to an apex 62 at the transport positions T1, T2. Each apex 62 is provided with a small dent 64.

The child seat 3 is provided with a second belt tensioning device 71 for tensioning the tensioning belt 11 of the harness 8 at a required predetermined force, thereby tensioning the shoulder belts and lap belts also at the same predetermined force. The second belt tensioning device 71 comprises a first arm 72 provided with a roller 73 resting on the circular shaped profile 24 of the base 2. The first arm 72 is pivotably about pivot axis 74 connected to a non-reclining part of the child seat 3.

The second belt tensioning device 71 comprises a second arm 75 provided with a roller 76 resting on a second auxiliary profile 77 of the first arm 72. The second arm 75 is pivotably about pivot axis 75' connected to the child seat 3. The second belt tensioning device 71 also comprises three rollers 78, 79, 80. The two rollers 78, 79 are connected to the child seat 3, whilst the third roller 80 is connected at a distance from the roller 76 to an end of the second arm 75. The roller 80 is located between the rollers 78, 79.

When the child seat 3 is being reclined between different recline positions, the second arm 75 will be reclined together with de child seat 3, whereby the roller 76 will move over the curved surface of the second auxiliary profile 77, thereby maintaining contact with the second auxiliary profile 77.

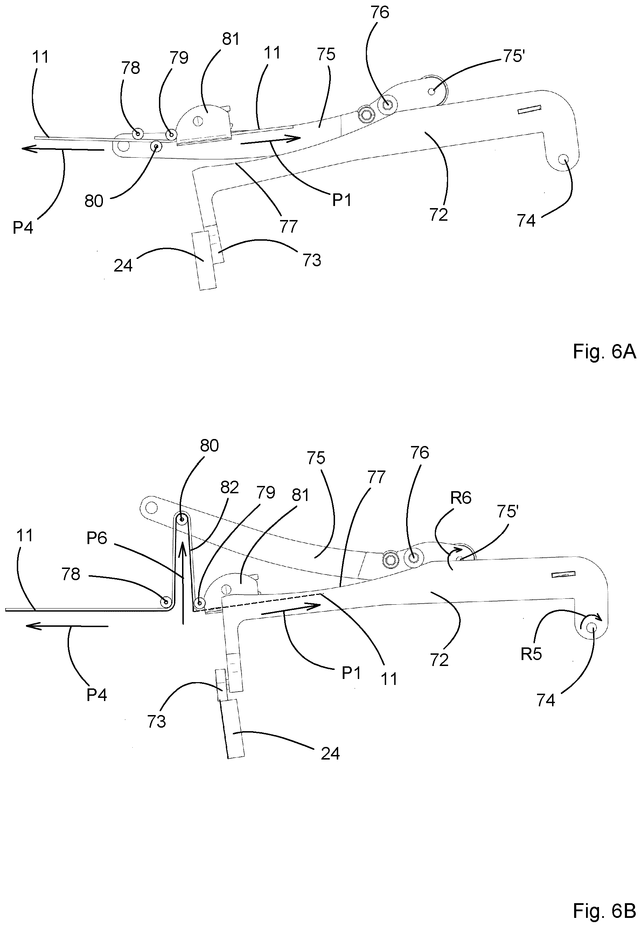

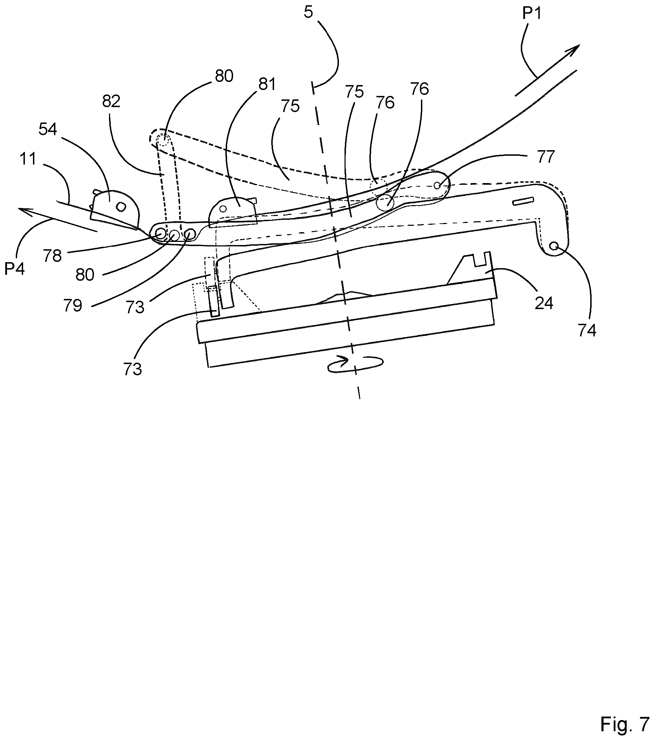

Figure 7 shows in solid lines the same situation as shown in figure 6A and in dotted lines the same situation as shown in figure 6B.

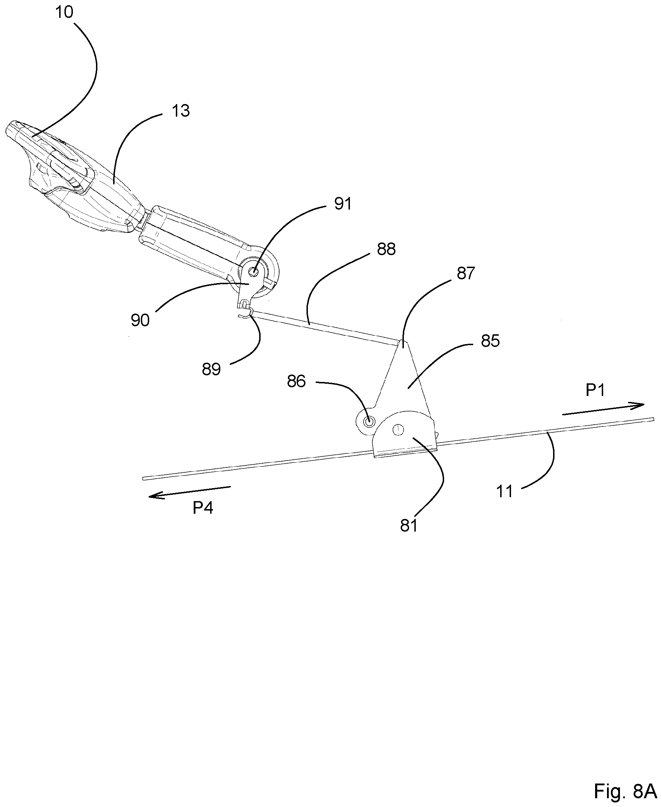

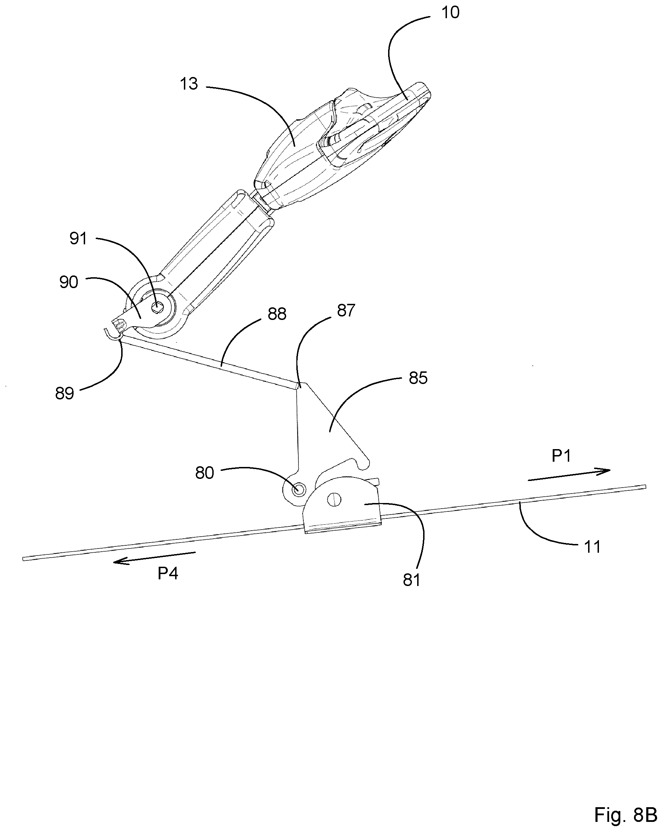

As can be seen in figure 7, the second belt tensioning device 71 comprises the first lock 54 being described above and a second lock 81 being similar to first lock 54. The lock 81 is also provided with a teethed profile to lock the tensioning belt 11. The locks 54, 81 are directed to each other in a manner that when the teethed profiles are in engagement with the tensioning belt 11 and a force is applied on the tensioning belt 11 in direction indicated by arrows P1, P4 the tensioning belt 11 cannot be moved in the directions indicated by arrows P1, P4. However, if a force is applied on the tensioning belt 11 in a direction opposite to the direction indicated by arrow P1, P4 the tensioning belt 11 can be moved in the direction opposite to the direction indicated by arrows P1, P4. The second lock 81 is closed when the buckle 13 is in the position as shown in figure 8B and will be opened when the buckle 13 is in the position as shown in figure 8A and be pivoted under spring force away from the backrest portion 7. Such a way of opening and closing the second lock 81 is known from EP1623892B1 and is described with reference to the figures 8A and 8B.

In the position as shown in figure 5A, the child seat 3 is in the side facing position S1. The roller 73 rests on flat supporting surface 60 and the roller 80 is located below the rollers 78, 79. If the buckle 13 is in the position as shown in figure 8A, the second lock 81 will be open as well and a user can pull at the tensioning belt 11 in the direction as indicated by arrow P1 to get more space to place the harness 8 around the child. As soon as the buckle 13 of the harness 8 is in the position as shown in figure 8B, the second lock 81 will automatically be closed. As explained above, the first lock 54 will still be closed, when the child seat 3 is in the side facing position S1.

When rotating the child seat 3 to the transport position T1, the first lock 54 will be opened and the tensioning belt 11 will be tensioned by means of the first tensioning device 41 as explained with reference to the figures 3-4. At the same time the roller 73 of second tensioning device 71 will roll smoothly over the inclined supporting surface 61, thereby pivoting the arm 72 in the direction indicated by arrow R5. The arm 72 will push against the roller 76, thereby pivoting the arm 75 in the direction indicated by arrow R6 and moving the roller 80 between the rollers 78, 79 in upward direction indicated by arrow P6. Since the tensioning belt 11 is located between the rollers 78,79 and the roller 80, the tensioning belt 11 will form a loop 82, which will gradually be enlarged. As long as the first lock 54 is open, the automatic tensioning belt spooling mechanism will automatically reel the tensioning belt 11 in in the direction as indicated by arrow P4 until the force applied on the tensioning belt 11 in the direction indicated by arrow P1 and P4 are equal.

As explained above the first lock 54 will be locked just before the child seat 3 is in the transport position. When the first lock 54 and the second lock 81 are closed, the tensioning belt 11 can no longer be moved in the directions indicated by arrow P4 and be reeled in by the automatic tensioning belt spooling mechanism. By rotating the child seat 3 to the exact transport position T1, the roller 73 will be moved onto the apex 62 and be positioned in the dent 64. This will be noticed by the user as an indication that the transport position T1 has been reached. Near and at the transport position T1 roller 80 will pull at the tensioning belt 11 with a certain force. If the force needed to pull the tensioning belt 11 through the first lock 54 is larger than the force needed to pull the tensioning belt 11 through the second lock 81, the tensioning belt 11 will be pulled through the second lock 81 thereby tensioning the harness 8 around the child. However, if the force needed to pull the tensioning belt 11 through the first lock 54 is smaller than the force needed to pull the tensioning belt 11 through the second lock 81, the tensioning belt 11 will be pulled through the first lock 54. This will be continued till an equilibrium has been reached and the forces needed to pull the tensioning belt 11 through the first and second lock 54, 81 are the same. Since the force on the tensioning belt 11 at the side of the first lock 54 is determined by the predetermined force on the tensioning belt 11 caused by the automatic tensioning belt spooling mechanism, the force on the tensioning belt 11 on the side of the harness 8 will become equal to the predetermined force. In this manner it is assured that the child will always be tightened in the child seat 3 with the same predetermined force.

As can be understood from the explanation given above, the first belt tensioning device 41 is being used to open the first lock 54 to allow the automatic tensioning belt spooling mechanism to reel in a large amount of tensioning belt 11 with a predetermined force, whilst the second belt tensioning device 71 is being used to ensure that the force on the harness 8 after the first and second locks 54, 81 are closed will always be the same as the predetermined force.

When the child seat 3 is being moved from the transport position T1 to the side facing position S1, the first lock 54 remains locked. At the side facing position S1, the buckle 13 will be in the position as shown in figure 8A, whereby the second lock 81 will also be unlocked. The user can now pull at the harness 8, whereby the length of the loop 82 of the tensioning belt 11 can be moved through the open second lock 81 to enlarge the harness 8 so that it can easily be removed from the child. The user does not need to apply much force on the tensioning belt 11 to pull the length of the loop 82 of the tensioning belt 11 through the open second lock 81. If more length of the tensioning belt 11 is needed, the user must pull at the tensioning belt 11 with a force larger than the predetermined force to pull the tensioning belt 11 from the automatic tensioning belt spooling mechanism and through the first lock 54.

When starting to rotate the child seat 3 from the side facing position S1, S2 to the transport position T1, T2 the tension on the tensioning belt 11 is relatively low but will be increased during rotation till the desired higher tension at the transport position T1, T2.

By using the length of the loop 82, the length of the harness 8 is adjustable to a larger length enabling the child to easy leave and/or enter the child seat 3, with length is increased from a short length at the transport position t1, T2 when the child is secured in the seat by means of the harness 8 to the larger length at a side facing position S1, S2.

Figures 8A and 8B show side views of the buckle 13 and the second lock 81. The second lock 81 cooperates with a lever 85 being pivotably about pivot axis 86. The pivot axis 86 is connected to the child seat 3. The lever 85 is connected at pivot axis 87 to a first end of a rod 88. At an opposite second end the rod 88 is connected at pivot axis 89 to a plate 90. The plate 90 is connected to the buckle 13 being pivotably about pivot axis 91.

When the buckle 13 in the position as shown in figure 8A, the buckle 13 is rotated away from the backrest portion 7. In this position of the buckle 13, the second lock 81 is open.

When the buckle 13 in moved to the position as shown in figure 8B, the buckle 13 is pivoted about pivot axis 91 towards the backrest portion 7, thereby pulling at the rod 88 and forcing the lever 85 to be pivoted about pivoted axis 86 in counterclockwise direction to close the second lock 81. So, in this position of the buckle 13, the second lock 81 is closed. When opening the buckle 13, it will be moved under spring force to the position as shown in figure 8A, thereby opening the second lock 81.

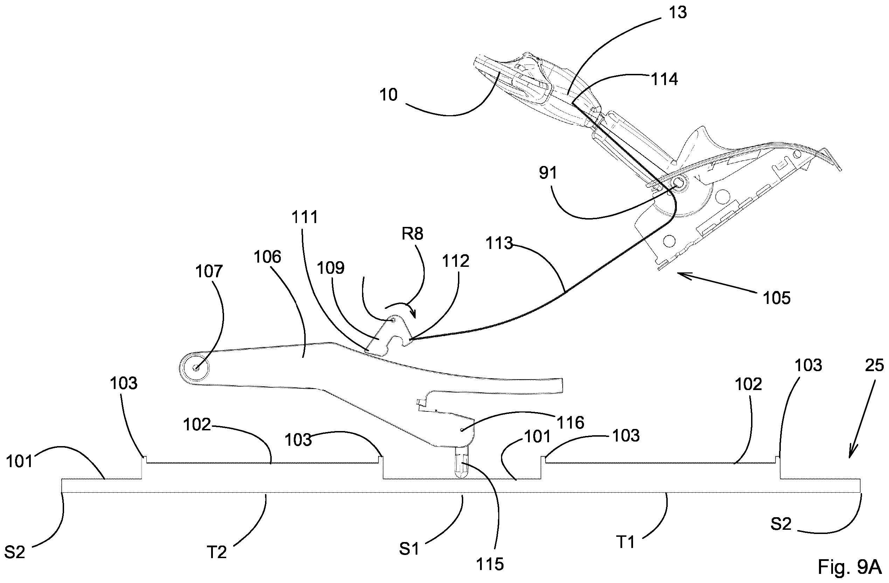

Figures 9A-9D show a third unfolded ring of the central part 21 as shown in figures 2A and 2B comprising the third circular shaped profile 25 as well as parts mounted on the child seat 3.

The third circular shaped profile 25 comprises a lower flat supporting surface 101 near each side facing position S1, S2 and higher flat supporting surface 102 at the transport positions T1, T2. At the transition between the higher flat supporting surface 102 and the lower flat supporting surface 101, the higher flat supporting surface 102 is provided with a raised ridge 103. In the third circular shaped profile 25 the raised ridges 103 are located about 5-10 degrees on each side of the side facing positions S1, S2.

The child seat 3 is provided with a buckle unlocking device 105 for unlocking the buckle 13.

The buckle unlocking device 105 comprises a lever 106 being pivotable about pivot axis 107 connected to a non-reclining part of the child seat 3. The lever 106 is provided with a third auxiliary profile 108 having a curved surface.

A reclining part of the child seat 3 comprises a cam 109 being pivotable against spring force about pivot axis 110 in and opposite to direction R8. A first end 111 of the cam 109 rests under spring force against the third auxiliary profile 108. A second end 112 of the cam 109 is connected via Bowden cable 113 to an operation button 114 of the buckle 13.

The lever 106 is provided on a side directed to the third circular shaped profile 25 with pen 115 being pivotable about pivot axis 116 in and opposite to direction R9.

In the position as shown in figure 9A, the child seat 3 is in the side facing position S1. The pen 115 extends downwards and rests with an end on the lower flat supporting surface 101. The buckle 13 is shown in the position as shown in figure 8B.

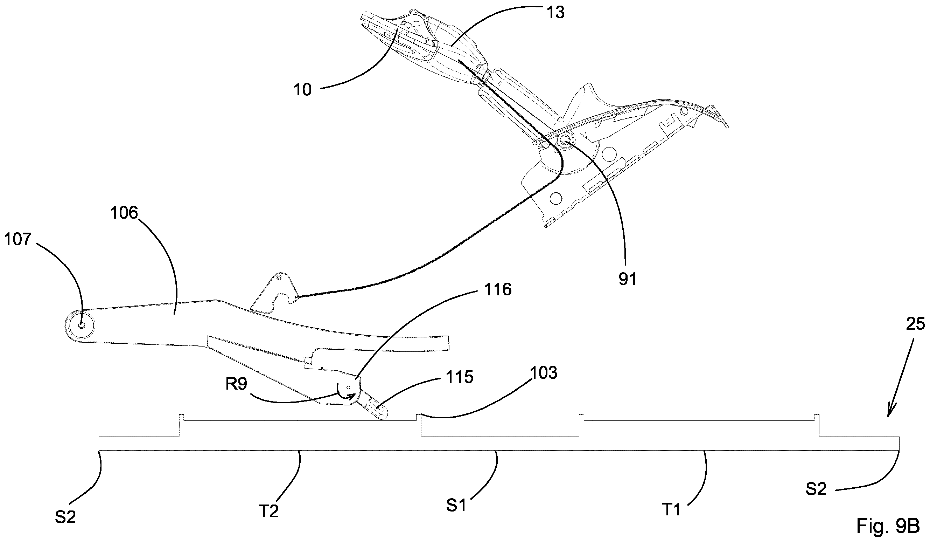

When the child seat 3 is being moved towards the transport position T2 (see figure 9B), the pen 115 will pivot in the direction indicated by arrow P9 to slide over the raised ridge 103 before resting on the higher flat supporting surface 102. The lever 106 will not pivot during the rotation of the child seat 3 from the side facing position S1 to the transport position T2.

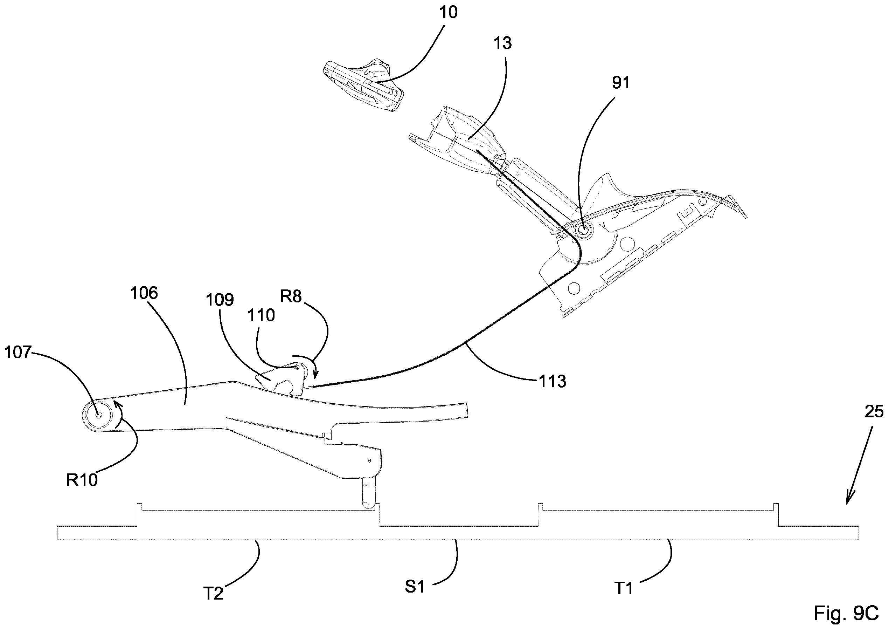

When the child seat 3 is being moved from the transport position T2 (see figure 9B) back to the side facing position S1, the pen 115 slide over the higher flat supporting surface 102 until it abuts against the raised ridge 103 (see figure 9C). At the raised ridge 103, the pen 115 will pivot in a direction opposite to the direction indicated by arrow P9 to a vertical position, thereby forcing the lever 106 to be pivoted in a direction indicated by arrow P10. By pivoting the lever 106, the third auxiliary profile 108 with the curved surface will push against the cam 109 and force the cam 109 to be pivoted in a direction indicated by arrow P8. By pivoting the cam 109 in a direction indicated by arrow P8, the cam 109 will pull on the Bowden cable 113 and the button 114 in the buckle 13, thereby opening the buckle 13 and releasing the buckle tongues 10 from the buckle 13. The buckle tongues 10 will get disconnected from the buckle 13 and the harness 8 will be released. After the buckle 13 is opened it will be moved under spring force to the position as shown in figure 8A, thereby unlocking the second lock 81. Due to the raised ridge the buckle 13 is instantaneously opened.

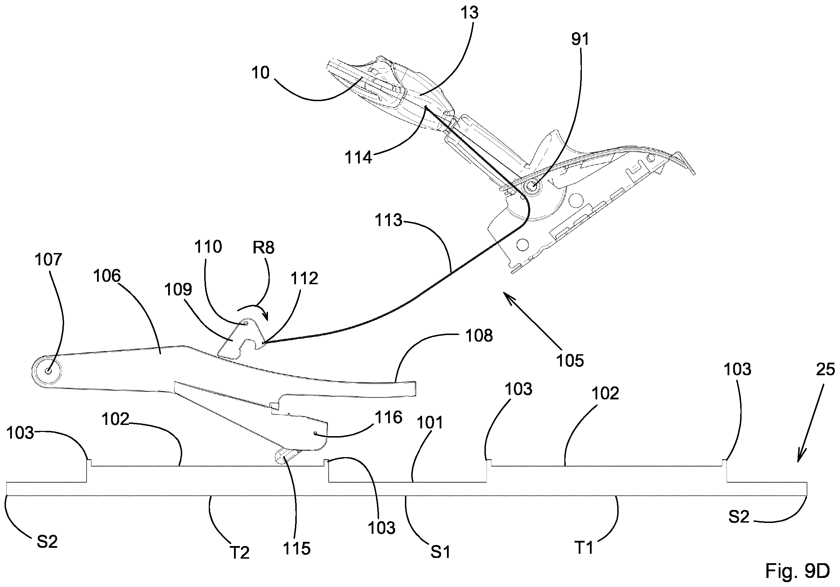

Figure 9D shows a situation wherein the child seat 3 has been rotated from side facing position S2 to transport position T2. When moving the child seat 3 further from transport position T2 to side facing position S1 the buckle 13 will not be unlocked. Such a rotation from one side position S2 to another side position S1 is namely very unlikely since a child vehicle seat 1 is normally located near the closest door and will always be rotated towards the same door. As the buckle 13 remains closed when rotating from one side position S2 to another side position S1, it will warn the user that something unusual has been done. If the user still wants to unlock the buckle 13, the user must do so manually by operating the button 114.

As explained above by rotating the child seat, the tensioning belt 11 can be reeled in, can be tensioned at a predetermined force and the buckle 13 can be unlocked. It can be foreseen that other adjustments can be activated during rotation of the child seat 3.

The child seat 3 of the shown child vehicle seat 1 is detachably connected to the base 2. This requires that the circular shaped profiles 23, 24, 25 of the base 2 must be separably from the cooperating elements on the child seat 3. However, it is also possible that the base 2 and the child seat 3 are not detachably in which case the base 2 can be provided with slots in which elements to operate the adjustable means of the child seat are movable, whereby these elements cannot be separated from the slots.

It is also possible that the child seat 3 can not be reclined in which case the auxiliary profiles and cooperating elements are not needed.

Instead of having circular shaped profiles with the profiles directed upwards, it is also possible to have circular profiles with the profiles directed to or opposite to the rotation axis.

It is also possible to have profiles on the base 2 with electronic, magnetical or visual elements cooperating with sensors on the child seat 3, whereby the sensors are being used to activate the adjustable means.

Instead of rollers and pens as profile followers it is possible to have other elements as profile followers being able to follow the profile when the child seat is being rotated with respect to the base from the first operation position to the second operation position and/or vice versa to adjust the adjustable means from the first operation position to the second operation position and/or vice versa.

When reclining the child seat 3 by pivoting the child seat 3 about a horizontal axis from a first pivoted position to a second pivoted position, the adjustable means will still operate to tension the tensioning belt 11 or open the buckle 13 since the profile follower (roller, pen etc) is provided at a distance of the profile with an auxiliary profile 44, 77, 108 extending perpendicular to the profile on the base 3, whereby the adjustable means is provided with an auxiliary profile follower 45, 76, 109, which auxiliary profile follower 45, 76, 109 follows the auxiliary profile 44, 77, 108 when the child seat 3 is being pivoted.

The radius of pivoting of the child seat 3 is preferably the same as the radius of the auxiliary profile 44, 77, 108.

The devices as described above can also be used to operate other adjustable means like adjusting the height of a headrest, opening or closing a sun canopy, adjusting the width of side impact devices, switch an active airbag from its sleep to it wake status, switching on/off of electronic devices, adjust elements in the seat that accommodate the child's width, such as the side wings next to the child head, the child's shoulders, it's hips and/or it's legs, adjusting the angle between the backrest portion and the seat portion, adjusting the height of the seat portion with respect to the base.

If a child seat comprises a carrying handle, it is possible that during rotatiing the child seat from the side facing position to the transport position, is automatically being rotated to an upwards directed position.

By the described embodiment a 5 point harness is being used. The invention can also be used for a 3 point harness with two shoulder belts 9" with buckle tongues 10 and a crotch belt with a buckle 13. Instead of a 3 or 5 point harness, some child seats use an impact shield to maintain a child in the child seat. A belt is being used to tension the impact shield. This belt can be tensioned by during rotation from the side facing position to the transport position.

It is also possible to tension the crotch belt or the lap belts by means of devices as described above.

It is also possible that by rotating the child seat to the rearward facing position, the child seat is automatically be reclined to a more sleeping position, whilst when the child seat is rotated to the forward facing position, the child seat is automatically be reclined to a more sitting position.

By the described embodiments there are two transport positions and two side facing positions. However, it is also possible that the adjustment means are only operated when moving between two transport positions, two side facing positions or two other positions of the child seat.

### LIST OF REFERENCE SIGNS

- 1: child vehicle seat
- 2: base
- 3: child seat
- 4: rotating platform
- 5: rotation axis
- 6: seat portion
- 7: backrest portion
- 8: harness
- 9': lap belts
- 9": shoulder belt
- 10: buckle tongue
- 11: tensioning belt
- 12: crotch belt
- 13: buckle
- 21: central part
- 22: outer ring
- 23: first circular shaped profile
- 24: second circular shaped profile
- 25: third circular shaped profile
- 26: flat strip
- 27: short flat supporting surface
- 28: inclined supporting surface
- 29: pivot axis
- 30: free space
- 31: end
- 41: first belt tensioning device
- 42: frame
- 42': pivot axis
- 43: roller
- 44: first auxiliary profile
- 45: first cam
- 46: pivot axis
- 47: first end
- 48: second end
- 49: rod
- 50: first end
- 51: second cam
- 52: pivot axis
- 53: teethed profile
- 54: first lock
- 55: supporting surface
- 60: flat supporting surface
- 61: inclined supporting surface
- 62: apex
- 64: dent
- 71: second belt tensioning device
- 72: first arm
- 73: roller
- 74: pivot axis
- 75: second arm
- 75': pivot axis
- 76: roller
- 77: second profile
- 78: roller
- 79: roller
- 80: roller
- 81: second lock
- 82: loop
- 85: lever
- 86: pivot axis
- 87: pivot axis
- 88: rod
- 89: pivot axis
- 90: plate
- 91: pivot axis
- 101: lower flat supporting surface
- 102: higher flat supporting surface
- 103: ridge
- 105: buckle unlocking device
- 106: lever
- 107: pivot axis
- 108: third auxiliary profile
- 109: cam
- 110: pivot axis
- 111: first end
- 112: second end
- 113: Bowden cable
- 114: operation button
- 115: pen
- 116: pivot axis
- P1: arrow
- P2: arrow
- P3: arrow
- P4: arrow
- P6: arrow
- P8: arrow
- P9: arrow
- P10: arrow
- R1: arrow
- R2: arrow
- R3: arrow
- R5: arrow
- R6: arrow
- R8: opposite direction
- R9: opposite direction
- S1: side facing position
- S2: side facing position
- T1: transport position
- T2: transport position

## Claims

1. A child vehicle seat (1) comprising a base (2) and a child seat (3) being rotatable about a rotation axis (5) with respect to the base (2) from at least a first rotation position to a second rotation position and vice versa, which child seat (3) is provided with means for holding a child in the child seat (3), which means being adjustable with respect to a child sitting in the child seat (3), **characterized in that** the adjustable means are adjustable from a first operation position to a second operation position by rotating the child seat (3) with respect to the base (2) between the first rotation position and the second rotation position and/or vice versa.

2. A child vehicle seat (1) according to claim 1, **characterized in that** the adjustable means comprise a harness (8) of the child seat (3), whereby tension of the harness (8) is adjustable to secure the child with a desired tension in the child seat (3), which tension is increased from a relative low tension at the first operation position to the desired higher tension at the second operation position, whereby the first rotation position is a side facing position whilst the second rotation position is a transport position.

3. A child vehicle seat (1) according to claim 1, **characterized in that** the adjustable means comprise a harness (8) of the child seat (3), whereby the length of the harness (8) is adjustable to a larger length enabling the child to easy leave and/or enter the child seat (3), with length is increased from a short length at the second operation position when the child is secured in the child seat (3) by means of the harness (8) to the larger length at a first operation position, whereby the second rotation position is a transport position whilst the first rotation position is a side facing position.

4. A child vehicle seat (1) according to claim 1, **characterized in that** the adjustable means comprise a buckle (13) of a harness (8) of the child seat (3), which buckle (13) is adjustable from the second operation position being a closed position of the buckle (13) wherein the child is secured in the child seat (3) by the harness (8) to the first operation position being an opened position of the buckle (13), whereby the second rotation position is a transport position whilst the first rotation position is a side facing position.

5. A child vehicle seat (1) according to claim 2, 3 and/or 4, **characterized in that** the child vehicle seat (1) comprises at least two adjustable means as mentioned in the claims 2, 3 and 4.

6. A child vehicle seat (1) according to one of the preceding claims, **characterized in that** the second rotation position is a transport position being a forward-facing transport position or a rearward facing transport position.

7. A child vehicle seat (1) according to one of the preceding claims, **characterized in that** the base (2) is provided with at least one circular shaped profile (23, 24, 25) having an axis which coincides with the rotation axis (5), whilst a seat carrying element is provided with profile follower located against the at least one circular shaped profile (23, 24, 25), which profile follower follows the at least one circular shaped profile (23, 24, 25) when the child seat (3) is being rotated with respect to the base (2) from the first rotation position to the second rotation position and/or vice versa to adjust the adjustable means from the first operation position to the second operation position and/or vice versa.

8. A child vehicle seat (1) according to claim 7, **characterized in that** the circular shaped profile (23, 24) comprises at least one slope along which the profile follower is movable to gradually move the adjustable means from the first operation position to the second operation position and/or vice versa.

9. A child vehicle seat (1) according to claim 7 or 8, **characterized in that** the circular shaped profile (25) comprises at least one ridge (103) over which the profile follower is movable to instantaneously move the adjustable means from the first operation position to the second operation position and/or vice versa.

10. A child vehicle seat (1) according to claim 9, **characterized in that** the child vehicle seat (1) is movable to two opposite located side facing positions, whereby the circular shaped profile (25) comprises at least four ridges (103) located at 5-10 degrees on each side of each side facing position.

11. A child vehicle seat (1) according to claims 4 and 9, 10, **characterized in that** the buckle (13) is being opened when the profile follower is being moved over the ridge (103).

12. A child vehicle seat (1) according to one of the preceding claims, **characterized in that** the child seat (3) is pivotable about a horizontal axis from a first pivoted position to a second pivoted position, wherein the profile follower is provided at a distance of the profile with an auxiliary profile (44, 77, 108) extending perpendicular to the at least one circular shaped profile (23, 24, 25) on the base (2), whereby the adjustable means is provided with an auxiliary profile follower, which auxiliary profile follower follows the auxiliary profile (44, 77, 108) when the child seat (3) is being pivoted.

13. A child vehicle seat (1) according to claim 12, **characterized in that** the radius of pivoting of the child seat (3) is the same as the radius of the auxiliary profile (44, 77, 108).

14. A child vehicle seat (1) according to at least claim 2, **characterized in that** the child seat (3) is provided with a first and second closable lock (54, 81) and a tensioning device (71) located between the two locks (54, 81), whereas the harness (8) is provided with a tensioning belt (11), which tensioning belt (11) extends through the first lock (54), along the tensioning device (71) and trough the second lock (81), whereby when both locks (54, 81) are closed, the tensioning device (71) is movable against spring force of the first respectively second lock (54, 81) thereby pulling the tensioning belt (11) through the first and/or second lock (54, 81) to tension the harness (8) to the desired tension, whilst movement of the tensioning belt (11) in the first respectively second lock (54, 81) in a direction away from the other lock (54, 81) is locked.

15. A child vehicle seat (1) according to claim 3 and 14, **characterized in that** after opening the second lock (81) and the first lock (54) is still closed, the tensioning device (71) is movable towards the locks (54, 81) to allow part of the tensioning belt (11) located between the locks (54, 81) and along the tensioning device (71) to be moved through the second lock (81) in the direction of the harness (8) so that the length of the harness (8) including the tensioning belt (11) on a side of the second lock (54) is adjustable to the larger length enabling the child to easy leave and/or enter the child seat (3).

16. A child vehicle seat (1) according to claim 14 or 15, **characterized in that** the child seat (3) is provided with an automatic tensioning belt spooling mechanism on side of the first lock (54) opposite to the tensioning device and opposite to the harness (8).

17. A child vehicle seat (1) according to one of the preceding claims, **characterized in that** the child seat (3) is removably connected to the base (2).
